# EUROPEAN PATENT APPLICATION

(11) **EP 1 369 821 A2**
(43) Date of publication of application: **10.12.2003**
(21) Application number: 03250589.3
(22) Date of filing: 30.01.2003
(51) Int. Cl.: G06T 11/20

(54) **Segment editing support apparatus and method**

(30) Priority: 06.06.2002 JP 2002166261
(71) Applicant: FUJITSU LIMITED, Kawasaki-shi, Kanagawa 211-8588 (JP)
(72) Inventor: Ohtsuka, Iwao, c/o Fujitsu Limited, Kawasaki-shi, Kanagawa 211-8588 (JP)
(74) Representative: Stebbing, Timothy Charles

(57) **Abstract**

An apparatus and method for supporting editing of a segment displayed on a screen includes: specifying a segment to be edited; extracting attribute information at least containing information on a starting point and an endpoint of the segment; determining the starting point and the endpoint of the segment, or either one of the starting point and the endpoint of the segment, based on the attribute information; and displaying the starting point and the endpoint of the segment, or either one of the starting point and the endpoint of the segment.

## Description

The present invention relates to an apparatus and method for supporting an editing operation with respect to a segment in a word processor and the like.

Due to the recent rapid spread of personal computers (hereinafter, referred to as "PCs"), general users have come to create presentation data in an office or the like, and a flow chart or the like for program development easily by using a general word processor or an unsophisticated graphics tool on a PC.

When an arrow is drawn on a created drawing, an arrow may be drawn thereon directly. The following method is also used often: a previously drawn segment is converted to a segment with an arrow by changing the kind of the segment into an arrow.

However, in a conventional drawing editing apparatus used for creating presentation data or the like, when a segment is drawn on a screen, there is no indication representing which side of the segment is the starting point and which side thereof is the endpoint, and attribute information such as a property is merely stored. Therefore, when a user attempts to display one end of a previously drawn segment as an arrow, it is not clear which side corresponds to the starting point and which side corresponds to the endpoint. As a result, the user often makes mistakes of displaying a wrong end as an arrow. This necessitates a repeated operation to be executed during editing of a segment, resulting in an unsatisfactory efficiency of the operation and degraded operability.

Therefore, with the foregoing in mind, it is an object of the present invention to provide a segment editing support apparatus and method in which, even in the case where an editing operation is executed with respect to a previously drawn segment, a starting point and an endpoint of the segment, or either one of them is made clear.

In order to achieve the above-mentioned object, a segment editing support apparatus for supporting editing of a segment displayed on a screen includes: a segment specifying part for specifying the segment to be edited; an attribute information extracting part for extracting attribute information at least containing information on a starting point and an endpoint of the segment; a starting point/endpoint determining part for determining the starting point and the endpoint of the segment, or either one of the starting point and the endpoint of the segment, based on the attribute information; and a starting point/endpoint display part for displaying the starting point and the endpoint of the segment, or either one of the starting point and the endpoint of the segment.

Because of the above configuration, even in the case where an editing operation is executed with respect to a previously drawn segment, the starting point and the endpoint of the segment, or either one of the starting point and the endpoint of the segment can be clarified, and an editing mistake can be prevented, for example, in an editing operation with respect to an arrow or the like, whereby an operation efficiency can be enhanced.

Furthermore, in the segment editing support apparatus of the present invention, it is preferable that the starting point/endpoint display part displays which end of the segment the starting point and the endpoint or either one of the starting point and the endpoint corresponds to by providing a color or a pattern to a display symbol indicating an end portion of the segment or an end of the segment. This is because it can be understood at a glance of a screen display which end of the segment is the starting point or the endpoint.

Furthermore, in the segment editing support apparatus of the present invention, it is preferable that the starting point/endpoint display part displays which end of the segment corresponds to the starting point or the endpoint by changing a display of a pointer based on whether the pointer pointing a coordinate position on a screen is positioned closer to the starting point or the endpoint of the segment. This is because the starting point or the endpoint can be confirmed only by operating a pointer of a mouse or the like, and operability can be further enhanced.

Furthermore, the present invention is characterized by software for executing the functions of the above-mentioned segment editing support apparatus as processing operations of a computer. More specifically, the present invention is characterized by a method for supporting editing of a segment displayed on a screen including: specifying the segment to be edited; extracting attribute information at least containing information on the starting point and the endpoint of the segment; determining the starting point and the endpoint of the segment, or either one of the starting and the endpoint of the segment, based on the attribute information; and displaying the starting point and the endpoint of the segment, or either one of the starting point and the endpoint of the segment.

Because of the above configuration, by loading the program onto a computer for execution, a segment editing support apparatus can be realized, in which even in the case where an editing operation is executed with respect to a previously drawn segment, the starting point and the endpoint of the segment, or either one of the starting point and the endpoint of the segment can be clarified, and an operation mistake can be prevented, for example, in an editing operation with respect to an arrow or the like, whereby an operation efficiency can be enhanced.

These and other advantages of the present invention will become apparent to those skilled in the art upon reading and understanding the following detailed description with reference to the accompanying figures.
FIG. 1 is a view showing a configuration of a segment editing support apparatus of an embodiment according to the present invention.
FIGS. 2A to 2C are views illustrating an operation of a segment specifying part in the segment editing support apparatus of the embodiment according to the present invention.
FIG. 3 shows a segment attribute in the segment editing support apparatus of the embodiment according to the present invention.
FIG. 4 is a view illustrating a display in a starting point/endpoint display part in the segment editing support apparatus of the embodiment according to the present invention.
FIG. 5 is a view illustrating a display in a starting point/endpoint display part in the segment editing support apparatus of the embodiment according to the present invention.
FIG. 6 is a view illustrating a display in a starting point/endpoint display part in the segment editing support apparatus of the embodiment according to the present invention.
FIGS. 7A and 7B are views illustrating a display in a starting point/endpoint display part in the segment editing support apparatus of the embodiment according to the present invention.
FIG. 8 shows a processing flow in the segment editing support apparatus of the embodiment according to the present invention.
FIG. 9 illustrates computer environment.

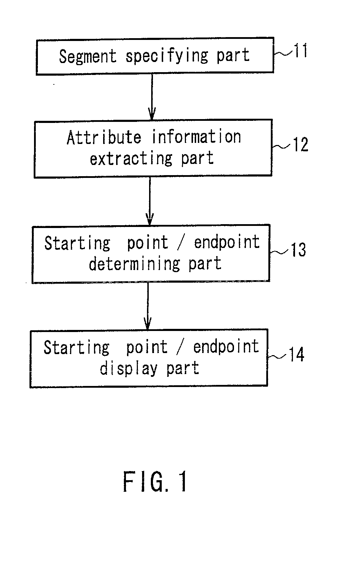

Hereinafter, a segment editing support apparatus of an embodiment according to the present invention will be described with reference to the drawings. FIG. 1 shows a configuration of the segment editing support apparatus of the embodiment according to the present invention. In FIG. 1, reference numeral 11 denotes a segment specifying part, 12 denotes an attribute information extracting part, 13 denotes a starting point/endpoint determining part, and 14 denotes a starting point/endpoint display part.

The segment specifying part 11 specifies a previously drawn segment to be edited on a screen. There is no particular limit to a method for specifying a segment. Various methods as shown in FIGS. 2A to 2C are considered.

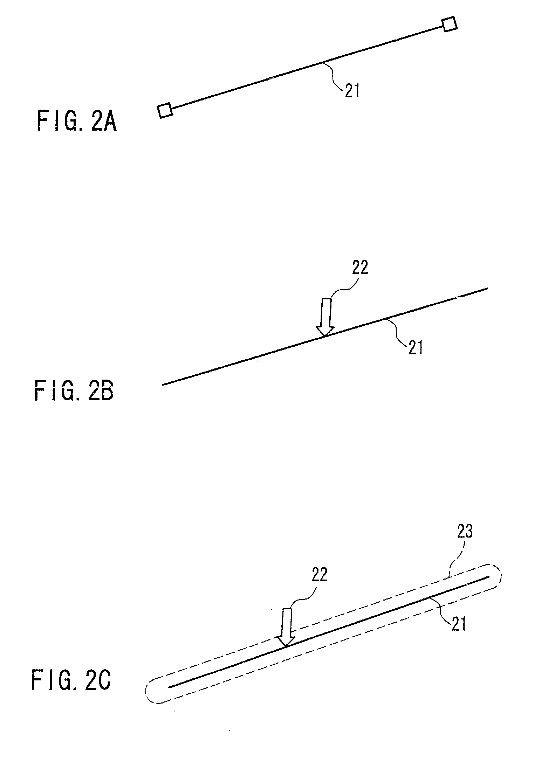

Specifically, as shown in FIG. 2A, a segment 21 to be edited is selected using an input medium such as a mouse. Alternatively, as shown in FIG. 2B, the segment 21 to be edited is considered to be selected at a time when a pointer 22 of an input medium such as a mouse is moved on the segment 21.

Alternatively, as shown in FIG. 2C, the segment 21 to be edited is considered to be selected at a time when the pointer 22 of an input medium such as a mouse is moved in the vicinity of the segment 21 to be edited. In this case, there is no particular limit to a method for determining a region 23 in the vicinity of the segment 21. For example, a region away from the segment 21 to be edited by a value, which is obtained by multiplying the length of the segment 21 by a coefficient with a predetermined ratio, may be determined to be in the vicinity.

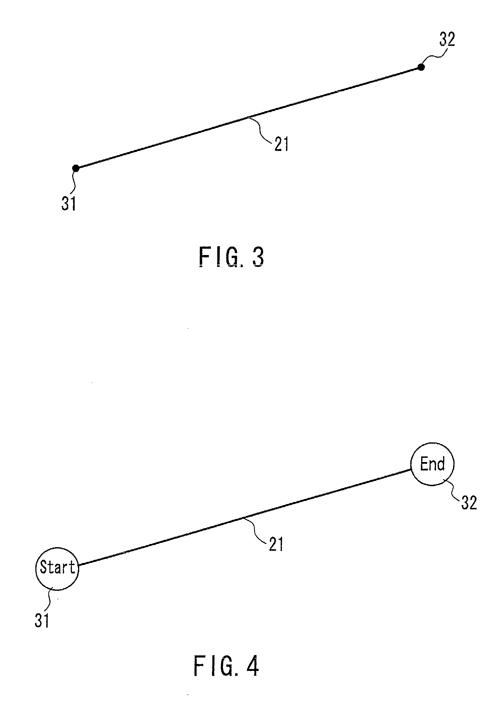

Next, regarding the specified segment, the attribute information extracting part 12 searches for attribute information stored as a property or the like at a time when the segment is drawn. The starting point/endpoint determining part 13 determines which ends of the segment the starting point and the endpoint of the segment respectively correspond to. More specifically, as shown in FIG. 3, it is determined from the attribute information which ends of the segment 21 to be edited the starting point 31 and the endpoint 32 of the segment 21 correspond to. FIG. 3 does not show a method for displaying a starting point and an endpoint. Symbols "●" presented by the starting point 31 and the endpoint 32 indicate points having an area of zero.

Then, the starting point/endpoint display part 14 displays the starting point 31 and the endpoint 32 of the segment 21 to be edited by various methods. Hereinafter, a specific display example will be described with reference to the drawings.

First, in FIG. 4, when the segment 21 to be edited is selected by a mouse or the like, display symbols indicating a starting point and an endpoint are output to the starting point 31 and the endpoint 32 of the segment 21, respectively.

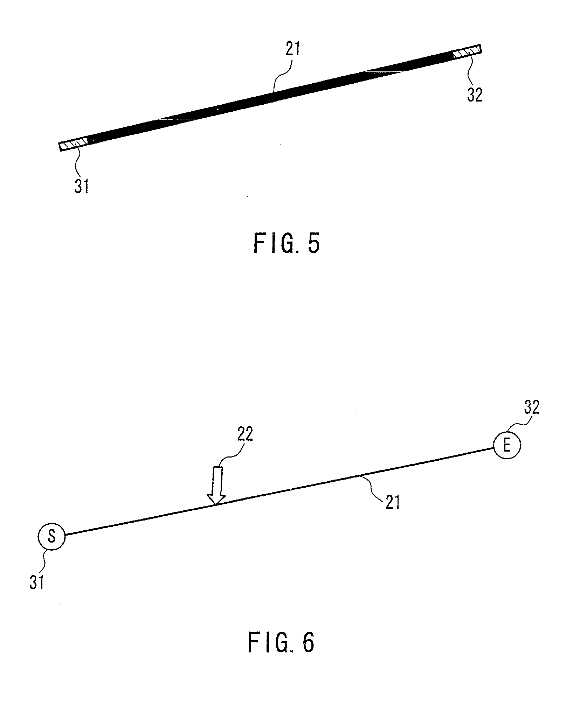

Alternatively, as shown in FIG. 5, when the segment 21 to be edited is selected by a mouse or the like, end portions of the starting point 31 and the endpoint 32 of the segment 21 are colored in different colors (for example, the starting point 31 is colored to be blue, the endpoint 32 is colored to be red, etc.). Alternatively, instead of using colors, the starting point 31 and the endpoint 32 may be discriminated clearly by changing a display attribute such as a pattern. In FIG. 5, for convenience of displaying a region, the segment 21 is displayed as having a width; however, it should be understood that the segment 21 does not have a width.

Alternatively, as shown in FIG. 6, when the segment 21 to be edited is selected by a mouse or the like, icons in different colors may be displayed at the end portions of the starting point 31 and the endpoint 32 of the segment 21. For example, an icon displaying a blue character "S(tart)" is indicated at the end portion of the starting point 31, and an icon displaying a red character "E(nd)" is indicated at the end portion of the endpoint 32, respectively. Needless to say, there is no particular limit to the display method of icons.

Alternatively, when the pointer 22 of a mouse or the like is moved on the segment 21 to be edited, the display of the pointer 22 itself may be changed so as to indicate a starting point or an endpoint, based on whether the pointer 22 is positioned closer to the starting point 32 of the segment 21 or is positioned closer to the endpoint 32 thereof.

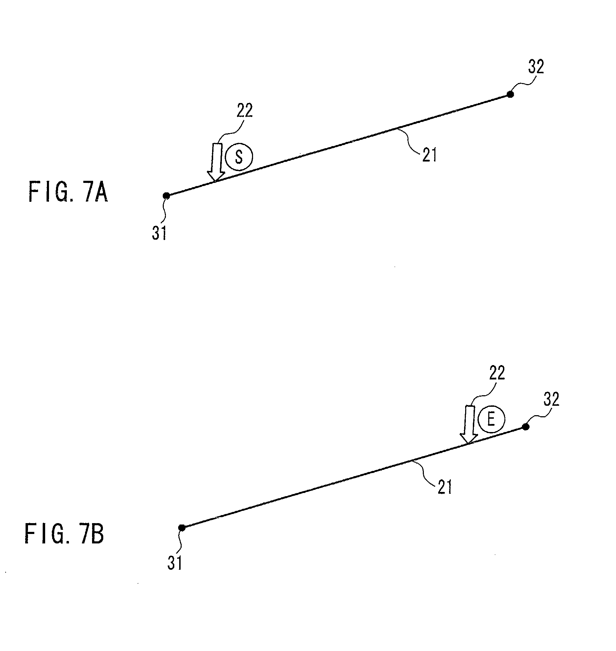

For example, as shown in FIGS. 7A and 7B, when the pointer 22 of a mouse or the like is moved on the segment 21 to be edited, in the case where the pointer 22 is positioned closer to the starting point 31 of the segment 21, i.e., on the side of the starting point 31 with respect to a middle point of the segment 21, a blue symbol "S(tart)" is displayed as shown in FIG. 7A. In the case where the pointer 22 is positioned closer to the endpoint 32 of the segment 21, i.e., on the side of the endpoint 32 with respect to the middle point of the segment 21, a red symbol "E(nd)" is displayed as shown in FIG. 7B. Needless to say, the display method is not limited thereto. The color, pattern, or the like of the pointer 22 may be changed instead of changing those of the icons.

In the present embodiment, the case where both the starting point 31 and the endpoint 32 are displayed has been described. However, if either one side is determined to be the starting point 31 or the endpoint 32, the other side can be automatically determined to be the endpoint 32 or the starting point 31. Therefore, only one side may be displayed.

Furthermore, according to the above-mentioned various display methods in the present embodiment, the starting point 31 and the endpoint 32 keep being displayed while the segment is specified for editing. However, the continuous display of the starting point 31 and the endpoint 32 may cause any inconvenience to the subsequent operation. Therefore, it is preferable that the starting point 31 and the endpoint 32 are automatically deleted when a predetermined period of time has elapsed after the segment is specified for editing or when another segment is selected.

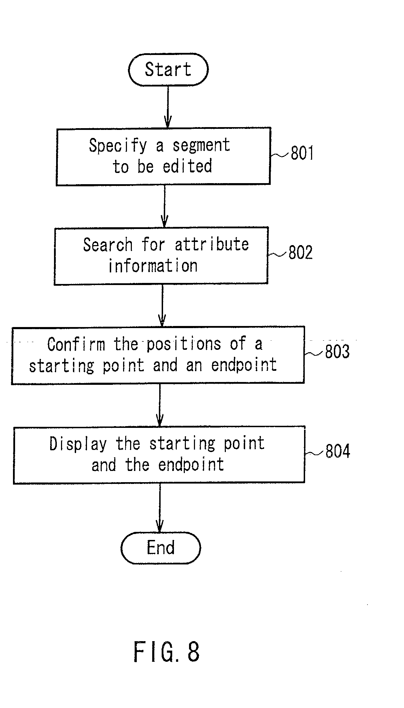

Next, a processing flow of a program for realizing the segment editing support apparatus of the embodiment according to the present invention will be described. FIG. 8 shows a diagram illustrating a processing flow of a program for realizing the segment editing support apparatus of the embodiment according to the present invention.

In FIG. 8, a drawn segment to be edited is specified by a pointing device such as a mouse on a screen (Operation 801). Then, regarding the specified segment, attribute information stored as a property or the like when the segment is drawn is searched for (Operation 802). It is determined which end of the segment the starting point and the endpoint correspond to (Operation 803).

Then, the starting point and the endpoint of the segment are displayed so as to be overlapped with the segment displayed on the screen (Operation 804).

As described above, according to the present embodiment, even in the case where an editing operation is executed with respect to a previously drawn segment, the starting point and the endpoint of the segment, or either one of the starting point and the endpoint of the segment can be clarified, and an editing mistake can be prevented, for example, in an editing operation with respect to an arrow or the like, whereby an operation efficiency can be enhanced.

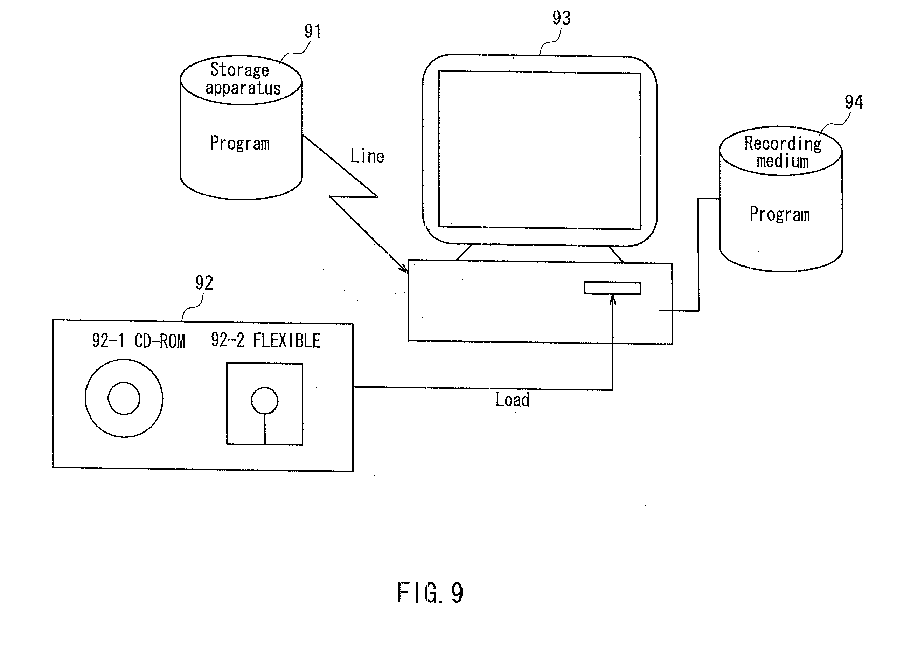

The program for realizing the segment editing support apparatus of the embodiment according to the present invention may be stored not only in a portable recording medium 92 such as a CD-ROM 92-1 and a flexible disk 92-2, but also in another storage apparatus 91 provided at the end of a communication line and a recording medium 94 such as a hard disk and a RAM of a computer 93, as shown in FIG. 9. In execution, the program is loaded, and executed on a main memory.

Furthermore, attribute information and the like used by the segment editing support apparatus of the embodiments according to the present invention may also be stored not only in a portable recording medium 92 such as a CD-ROM 92-1 and a flexible disk 92-2, but also in another storage apparatus 91 provided at the end of a communication line and a recording medium 94 such as a hard disk and a RAM of a computer 93, as shown in FIG 9. The attribute information is read by a computer 93 using the segment editing support apparatus of the present invention.

As described above, according to the segment editing support apparatus of the various embodiments of the present invention, even in the case where an editing operation is executed with respect to a drawn segment, the starting point and the endpoint of the segment, or either one of the starting point and the endpoint of the segment can be clarified, and an operation mistake can be prevented, for example, in an editing operation with respect to an arrow or the like, whereby an operation efficiency can be enhanced.

The embodiments of the invention are not limited to straight line segments as depicted in the drawings, and any icon could be drawn onto the starting point or endpoint of the segment, not only an arrow.

## Claims

1. A segment editing support apparatus for supporting editing of a segment displayed on a screen, comprising:
a segment specifying part for specifying the segment to be edited;
an attribute information extracting part for extracting attribute information at least containing information on a starting point and an endpoint of the segment;
a starting point/endpoint determining part for determining the starting point and the endpoint of the segment, or either one of the starting point and the endpoint of the segment, based on the attribute information; and
a starting point/endpoint display part for displaying the starting point and the endpoint of the segment, or either one of the starting point and the endpoint of the segment.

2. A segment editing support apparatus according to claim 1, wherein the segment specifying part specifies the segment when a pointer pointing to a coordinate position on a screen is moved on to the segment to be edited or in a vicinity thereof.

3. A segment editing support apparatus according to claim 1, wherein the segment specifying part specifies the segment when the segment to be edited is clicked by a pointing device.

4. A segment editing support apparatus according to claim 1, 2 or 3, wherein the starting point/endpoint display part displays which end of the segment the starting point and the endpoint or either one of the starting point and the endpoint corresponds to by providing a color or a pattern to a display symbol indicating an end portion of the segment or an end of the segment.

5. A segment editing support apparatus according to claim 1, 2 or 3, wherein the starting point/endpoint display part displays the segment with an icon provided to the starting point and the endpoint thereof, or either one of the starting point and the endpoint thereof.

6. A segment editing support apparatus according to any preceding claim, wherein the starting point/endpoint display part displays which end of the segment the starting point and the endpoint or either one of the starting point and the endpoint corresponds to on a screen for a predetermined period of time.

7. A segment editing support apparatus according to claim 2, wherein the starting point/endpoint display part displays which end of the segment corresponds to the starting point or the endpoint by changing a display of a pointer based on whether the pointer pointing a coordinate position on a screen is positioned closer to the starting point or the endpoint of the segment.

8. A segment editing support method for supporting editing of a segment displayed on a screen, comprising:
specifying the segment to be edited;
extracting attribute information at least containing information on the starting point and the endpoint of the segment;
determining the starting point and the endpoint of the segment, or either one of the starting and the endpoint of the segment, based on the attribute information; and
displaying the starting point and the endpoint of the segment, or either one of the starting point and the endpoint of the segment.

9. A computer-executable program for realizing a method for supporting editing of a segment displayed on a screen, the program comprising program code which, when executed by a computer, carries out the steps of:
specifying the segment to be edited;
extracting attribute information at least containing information on a starting point and an endpoint of the segment;
determining the starting point and the endpoint of the segment, or either one of the starting point and the endpoint of the segment, based on the attribute information; and
displaying the starting point and the endpoint of the segment, or either one of the starting point and the endpoint of the segment.

10. A segment editing support apparatus according to claim 2, wherein the pointer is controlled by a mouse or via a keyboard.
